Europäisches Patentamt

European Patent Office

Office européen des brevets

(19)

(11) Publication number: **0 032 405
B1**

(12) EUROPEAN PATENT SPECIFICATION

(45) Date of publication of patent specification: **22.08.84**

(51) Int. Cl.³: **C 04 B 35/64,** B 22 F 3/12

(21) Application number: **81100211.2**

(22) Date of filing: **14.01.81**

(54) **Method of making inelastically compressible ductile particulate material article and subsequent working thereof.**

(30) Priority: **14.01.80 US 111634**

(43) Date of publication of application:
**22.07.81 Bulletin 81/29**

(45) Publication of the grant of the patent:
**22.08.84 Bulletin 84/34**

(84) Designated Contracting States:
**CH DE FR GB LI NL**

(56) References cited:
**FR-A-2 310 177**
**GB-A-1 516 079**
**US-A-3 313 621**
**US-A-3 510 935**

(73) Proprietor: **WITEC Cayman Patents Ltd.
Barclay's Bank Building P.O. Box 1043
George Town Grand Cayman Cayman Islands
British West Indies (KY)**

(72) Inventor: **Wiech, Raymond E., Jr. Dr.
4659 Pescadero Avenue
San Diego California 92107 (US)**

(74) Representative: **Strasse, Joachim, Dipl.-Ing.
et al
Strasse und Stoffregen European Patent
Attorneys Zweibrückenstrasse 17
D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention is directed towards a method of producing an article from a sintered particulate configuration including the steps of mixing together predetermined amounts of particulate material and binder whereby said binder covers substantially all of the surface of the particles of said particulate material, said particles of particulate material having a high degree of sphericity, forming said mixture into a desired configuration, removing the binder from said configuration and sintering the stripped and formed material according to a time-temperature profile to provide a predetermined pore volume to material volume ratio.

From US—A—3,313,621 (MOTT) a method for producing an article from sintered particulate configuration is known wherein the part is placed in the die before sintering. At this stage the powder is held together by the resin and requires little force thereon.

From US—A—3,510,935 (DÜRRWÄCH-TER) a method is known by which highly porous blocks are molded for later processing. Radical movement of the metal is required to form the desired part. Also, the part would be weak because the porosity is provided only by minimal sintering which does not permit a high degree of diffusion.

The metal parts formed by these known conventional "press and sinter" powder-metallurgy processes are not ductile and therefore cannot be coined.

Therefore it is an object of the present invention to provide a method of producing an article from a sintered particulate configuration by which crush-forming can be used for high precision parts and particularly high precision stressed parts.

In accordance with the invention this problem is solved by the method as set forth in the characterizing part of claim 1.

In order to form precision parts using this method, a preform is made as above described which is substantially similar in shape to the final article except that the volume of the preform is larger than the final article by a volumetric amount which is less than the volume of the pores within the preform. The preform then is placed into a crush forming apparatus, such as a coining device, and crush formed within the die of the coining device. The preform will be compressed to exactly conform to the shape of the die with high precision with proper allowance for springback. Since the compressed volume of the preform exactly matches the volume within the die, there will be no flash and the final density of the precision article will closely approach the maximum density of the material from which the article is formed.

Detailed Description of Preferred Embodiments

The inelastic compressible material (i.e. material which when compressively deformed will maintain a negative volumetric permanent set) is formed by initially mixing a particulate material with a binder. The particulate material can be any material which can be reduced to a particle and which has a potential property of ductility (i.e. the particulate material can be altered later from a brittle material to a ductile or malleable material). The coefficient of diffusivity between the particles of particulate material must be sufficiently great so as to permit sintering at a reasonable rate. The term reasonable is based upon the economics involved in the particulate item being manufactured. Materials which meet the above requirements are iron, steel, substantially all other ductile metals, and ductile alloys.

The size of the particles of particulate material will vary in accordance with certain conditions. Preferred sizes normally run in the range of 1 to 5 $\mu$m though some specific materials may go down to tenths of $\mu$m and others may be in excess of ten $\mu$m. Tungsten would normally be in the tenths of $\mu$m range. The lower end of the size scale is dependent upon the flowability of the binder and particulate material mixture and it is often desirable to have the particles as small as possible as long as flow is available. The minimum size of particle that will flow is a function of the interfacial energy between the binder and the surface of the particulate material particles.

The shape of the particulate material particles is theoretically preferably spherical. In fact, it is desirable to have particles of a shape that minimize the total surface area of the particles per unit volume of the particles. For this reason, the ideal shape tends to be spherical although ovoid shapes and other similar shapes are successful. Dendritic and extended area shapes are not desirable though, in certain cases, some may operate satisfactorily.

With reference to the binder, it must have plastic properties such as polyethylene, nylon, polypropylene, many waxes such as carnauba and beeswax, paraffin and any other bindive material which is chemically inert with respect to the particulate material and which can easily be removed after the parts have been formed to their desired shape but prior to sintering.

The amount of binder relative to the amount of particulate material used in a mixture would be that amount of binder which will totally fill the interstices between the particles of particulate material. It is preferred that the highest concentration of particulate material relative to binder be used consistent with obtaining the necessary flow conditions for molding. A second consideration is to use less than the maximum amount of particulate material in the binder in the event it is desirable to adjust the pore volume in the final sintered article.

The binder and particulate materials are then mixed until they become homogeneous and the mixture, which is now homogeneous, is then used to form shaped articles by conventional means such as injection molding, extrusion, casting and the like as is well known to those skilled in the art. After the forming of the article by molding, the binder is removed by conventional technology as noted in Strivens patent numbers 2,939,199 and British 779,242 and Wiech British Patent No. 1,516,079 or by other appropriate techniques as may exist now or in the future. The article with binder removed is then sintered in accordance with conventional techniques, though, as will be explained hereinbelow, by controlling and adjusting the time and temperature profile of sintering, the pore size in the article can be controlled, thereby controlling the volumetric ratio of voids to final article volume.

The final sintered article will have the properties of being highly ductile, compressible and have the voids or pores therein uniformly distributed throughout the material.

The material as described above, after sintering, can now be crush formed to desired shapes and provide such shapes with extreme precision and relatively inexpensively relative to prior art methods. In the case of coining, the sintered articles would be formed in the molded state to substantially the same shape as the final article to be coined. However, the sintered part would have a slightly larger volume than the ultimate part, the difference between the volume of the sintered part and the final part being approximately equal to or less than the volume of the voids or pores in the sintered part. The consideration here is that, upon compression during coining, the material must have somewhere to flow without overflowing from the mold cavity. For this reason, if the volume of the pores in the article is the same as or greater than the difference in volume between the sintered article and the final article, all of the material during coining will remain within the mold cavity and eliminate the possibility of flash. Furthermore, since the density of the finally formed article will be substantially equal to or very closely approach the density of the raw metal without pores, the coined or crushed material within the mold will substantially exactly duplicate the shape of the mold with extreme precision down to thousandths of an inch and possibly with even more precision. This is accomplished by placing the sintered article into the coining system and particularly into the mold cavity therein. The coining operation then takes place in its normal manner and compresses the sintered article to conform to the shape of the mold as stated hereinabove. The coined article is then removed from the mold and is found to have no flash and to substantially exactly duplicate the shape of the mold. This procedure can be utilized in other types of crush forming systems such as drop forging, cold rolling, isostatic pressing and other similar forming systems.

Example I

Three hundred fifteen grams of substantially spherical nickel particulate material having an average particle size of four to seven $\mu$m and a specific surface area of 0.34 square meters per gram (Inco type 123 nickel powder) was mixed with 35.2 grams of carnauba wax. The mixture was placed in a laboratory type sigma blade mixer of 0.95 l (one quart) capacity and mixed at a temperature of 100°C for a period of one half hour. A homogeneous, uniform and modest viscosity plastisole formed. It was removed from the mixer, allowed to cool for an hour until the carnauba wax had solidified. The hardened material was broken up by a hammer and the pieces were placed into an injection molding machine of 14.2 g (one-half ounce) capacity. Several dozen rings were formed in the injection molding machine. Three at random were removed from this batch and placed in a Blue M laboratory oven on laboratory filter paper and the temperature was slowly raised from ambient temperature to the melting point of the binder of carnauba wax over a period of twenty minutes. The oven was permitted to sit at this temperature overnight for about 12 hours after which a ring of carnauba wax on the filter paper was noticed. The temperature over the next 8 hours was raised to 100°C and the oven was maintained at this temperature overnight. The following day the molded wax ring on the filter paper had increased greatly. The temperature in the oven was then raised to 150°C for 48 hours whereupon the temperature was again raised to 200°C for 8 hours. The oven was then allowed to cool and, when the temperature was close to room temperature, the three rings were removed therefrom. The rings were then placed into a controlled atmosphere kiln, the atmosphere of which was maintained at 90% argon and 10% hydrogen at a dew point of less than minus 60°C. The temperature was raised in the course of the next 24 hours from ambient to 371°C (700°F) in a substantially linear manner. The temperature was then raised to 704°C (1300°F) and maintained and then raised to a temperature of 1177°C (2150°F) over a course of 6 hours in a linear manner. This temperature was maintained for one hour and the kiln was shut off and allowed to cool to substantially room temperature. The three rings were removed from the kiln and weighed and placed in a pycnometer and the density of each of the rings was determined to be 8.54 grams/cc. A metallographic section of one specimen was then made, embedded in bakelite, polished and etched as to ASTM specification and then placed under a microscope. Spherical inclusions were noted substantially homogeneously distributed throughout the sample. The inclusions were much smaller than the crystal size and had a tendency to be located along crystal boundaries. The general appearance was that of forged material with spherical inclusions. The second ring that was removed from the kiln was measured and found to have an outside diameter of 2.26 cm to 2.25 cm since a perfect circle was not obtained. The second ring was then placed in a circular die of diameter 2.248 cm and forced through the die by an arbor press. The ring was measured and found to have a substantially uniform diameter of 2.25 cm. That portion of the ring that was not forced through the die was bright and shiny in appearance. As measured by a pycnometer, the density was found to be 8.65 after having made a weight check. The weight of the part was found to remain substantially constant. A metallographic section was made of the second ring in the manner described above. It was found that the uniform spherical inclusion structure had been altered by the compression of the outer circumference of the ring so that the outermost inclusions had compressed into an oblate shape with major axis about the same as the diameter of the spheres and the minor axis lying along the plane of the radius of the ring. The spherical inclusions along the inner diameter of the ring were found to be relatively unchanged.

### Example II

A run was made exactly the same as in Example I with exactly the same equipment with the particulate material being changed from nickel to substantially spherical iron of average particle diameter of 4 to 6 $\mu$m of substantially spherical shape. In this example 278.19 grams of iron were mixed with carnauba wax. The same testing procedure as set forth in Example I was utilized and the results were substantially identical to those listed in Example I except that the density of the rings removed from the kilns was approximately 7.46. The same results as in Example I were obtained after compression in a die in an arbor press.

### Example III

A further run was made using exactly the same procedure as set forth in Example I except that a mixture of nickel and iron was substituted for nickel alone. 50% of the weight of nickel as set forth in Example I and 50% of the weight of iron as set forth in Example II were utilized and mixed with 35.2 grams of carnauba wax. The results were exactly as set forth above with reference to Example I. The density of the rings after removal from the kiln was not measured specifically but the volume was found to have decreased after removal from the die. The weight of the body after sintering and after removal from the die was substantially the same. The article as observed during the metallographic observation under the microscope was noted to be a true alloy rather than isolated regions of nickel and iron.

### Example IV

185.3 grams of $Fe_2O_3$ of particle size less than 1 $\mu$m (of the type used for making magnetic tape as is well known) was mixed with 35.2 grams of carnauba wax and then operated on as set forth in Example I. The ring was molded as in Example I, except that firing schedule in the atmospheric kiln was not the same. The temperature was immediately raised to 377°C (700°F) and thereafter there was no difference in the firing schedule as set forth in Example I. The iron oxide is found to be reduced to metallic iron by the hydrogen component of the sintering atmosphere. There is also found a substantial decrease in volume of the ring during sintering. When the sintered pieces that were left were measured with a pycnometer, before and after hitting with a hammer, it was determined qualitatively that crushing took place. It was also found quantitatively in the pycnometer that density increased. The important feature in this example is that $Fe_2O_3$ is a brittle material and so the starting material is brittle and does not have ductility at any time whereas the sintered material evolved did have ductility.

### Claims

1. A method of producing an article from a sintered particulate configuration including the steps of mixing together predetermined amounts of particulate material and binder whereby said binder covers substantially all of the surface of the particles of said particulate material, said particles of particulate material having a high degree of sphericity,
   forming said mixture into a desired configuration,
   removing the binder from said configuration,
   sintering the stripped and formed material according to a time-temperature profile to provide a predetermined pore volume to material volume ratio, characterized in that
   the particulate material is selected from the class consisting of ductile metals, ductile alloys and non-ductile material which become ductile after sintering,
   the extent of diffusion of material from particle to particle under sintering conditions is of the same order as the particle size,
   a high precision article is formed by crush-forming the sintered material in a mold, the volume of compression approaching but not exceeding the volume of said pores.

2. A method as set forth in claim 1 wherein said step of crush-forming is performed by coining.

3. A method as set forth in claim 1 wherein said step of crush-forming is performed by drop forging.

4. A method as set forth in claim 1 wherein said step of crush-forming is performed by cold rolling.

5. A method as set forth in claim 1 wherein said step of crush-forming is performed by isostatic pressing.

## Patentansprüche

1. Verfahren zur Herstellung eines Gegenstandes aus einer gesinterten teilchenförmigen Zusammenstellung einschließlich des Zusammenmischens von vorherbestimmten Mengen teilchenförmigen Materials und Binder, wobei dieser Binder im wesentlichen die gesamte Oberfläche der Partikel des teilchenförmigen Materials abdeckt, wobei die Partikel des teilchenförmigen Materials zu einem hohen Grad kugelförmig sind, und des Formens dieser Mischung zu einer gewünschten Zusammenstellung, Entfernen des Binders aus dieser Zusammenstellung, Sintern des gestrippten und geformten Materials gemäß eines Zeit-Temperatur-Schemas, um ein vorherbestimmtes Verhältnis zwischen Porenvolumen und Materialvolumen zu erhalten, dadurch gekennzeichnet, daß das teilchenförmige Material aus der Klasse duktiler Metalle, duktiler Legierungen und nichtduktiler Materialien, die nach dem Sintern duktil werden, ausgewählt ist, daß das Ausmaß der Diffusion von Material von Partikel zu Partikel unter Sinterbedingungen im gleichen Bereich wie die Größe der Partikel liegt, daß ein hochpräziser Gegenstand mittels Druckformen des gesinterten Materials in einer Gußform geformt wird, wobei das Kompressionsvolumen sich an das Volumen der Poren annähert, es jedoch nicht überschreitet.

2. Verfahren gemäß Anspruch 1, wobei das Druckformen mittels Prägen ausgeführt wird.

3. Verfahren gemäß Anspruch 1, wobei das Druckformen mit Gesenkschmieden ausgeführt wird.

4. Verfahren gemäß Anspruch 1, wobei das Druckformen durch Kaltwalzen ausgeführt wird.

5. Verfahren gemäß Anspruch 1, wobei das Druckformen durch isostatisches Pressen ausgeführt wird.

## Revendications

1. Procédé du produire un solide, ce solide consistant d'une configuration frittée en forme de particules, ce procédé comportant la melange des quantités prédéterminées du matériel en forme de particules avec du matière agglutinante, cette matière agglutinante couvrant substantiellement la surface entière du matériel en forme de particules, les particules du-dite matériel ayant un degré considérable de sphéricité, le procédé comportant en outre de former une configuration désirée de cette mélange, ainsi que d'enlever la matière agglutinante de cette configuration et le frittage du matériel stripé et formé suivant un plan de temps-température déstiné à recevoir un rapport prédéterminé entre le volume des pores et le volume du matériel, caractérisé en ce que le matériel en forme de particules est choisi de la classe des métaux ductiles, des alliages ductiles et des matériaux non-ductiles qui deviennent ductiles après le frittage, que le degré de la diffusion du matériel du particule à particule, sous des conditions de frittage, se trouve dans la même zone que la largeur des particules, qu'un article de grande précision est formé par moulage à pression du matériel fritté dans un moule de fonte, le volume de la compression s'approchant aux volume des pores mais ne pas le dépassant.

2. Procédé suivant la revendication 1, caractérisé en ce que le moulage à pression est exécuté par étampage.

3. Procédé suivant la revendication 1, caractérisé en ce que le moulage à pression est exécuté par matriçage.

4. Procédé suivant la revendication 1, caractérisé en ce que le moulage à pression est exécuté par laminage à froid.

5. Procédé suivant la revendication 1, caractérisé en ce que le moulage à pression est exécuté par pression isostatique.